# EUROPÄISCHE PATENTSCHRIFT

(11) **EP 2 691 279 B1**
(45) Veröffentlichungstag und Bekanntmachung des Hinweises auf die Patenterteilung: **31.05.2017**
(21) Anmeldenummer: 12713010.2
(22) Anmeldetag: 26.03.2012
(51) Int. Cl.: B61D 37/00

(54) **VORRICHTUNG ZUR BEFESTIGUNG EINER HALTESTANGE SOWIE VERFAHREN ZUR HERSTELLUNG EINER SOLCHEN VORRICHTUNG**
DEVICE FOR FASTENING A HANDRAIL AND METHOD FOR PRODUCING SUCH A DEVICE
DISPOSITIF DE FIXATION D'UNE BARRE DE RETENUE ET PROCÉDÉ DE FABRICATION D'UN TEL DISPOSITIF

(30) Priorität: 29.03.2011 DE 102011006383
(43) Veröffentlichungstag der Anmeldung: 05.02.2014
(73) Patentinhaber: Bombardier Transportation GmbH, 10785 Berlin (DE)
(72) Erfinder: FRIEDRICH, Johann, A-1210 Wien (AT); ORTHNER, Christoph, A-1160 Wien (AT)
(74) Vertreter: Patentanwälte Bressel und Partner mbB
(86) Internationale Anmeldenummer: PCT/EP2012/055289
(87) Internationale Veröffentlichungsnummer: WO 2012/130784

(56) Entgegenhaltungen:
- WO-A1-2005/102773
- DE-U1- 29 518 343
- DE-U1- 29 805 233
- DE-U1- 29 913 289

## Beschreibung

Die Erfindung betrifft eine Vorrichtung, insbesondere für Schienenfahrzeuge, sowie ein Verfahren zur Herstellung einer solchen Vorrichtung.

Vielfach werden in Fahrzeugen für den öffentlichen Personentransport Haltestangen vorgesehen, damit die Personen sich während der Fahrt festhalten können. Es sind unterschiedliche Möglichkeiten zum Befestigen von Haltestangen in Fahrzeugen des Personentransports, insbesondere in Schienenfahrzeugen, bekannt. Z.B. können die meist rohrförmigen Haltestangen über angeschweißte Platten an ortsfesten Teilen des Fahrzeuges, z.B. an dem Fußboden oder der Decke, verschraubt werden. Eine derartige Befestigung wirkt sich jedoch störend auf einen ästhetischen Eindruck eines Innenraumes des Fahrzeuges aus, da die Befestigungselemente an den Befestigungsflächen des Fahrzeuges sichtbar sind. Auch können hervorstehende Befestigungselemente eine Verletzungsgefahr für Fahrgäste darstellen. Ferner sind die Teile dieser Art der Befestigung und die benachbarten Innenflächen des Fahrzeugs schwierig zu reinigen.

Die DE 93 14 961 U1 offenbart eine Anordnung zum Befestigen einer Haltestange, insbesondere in Fahrzeugen zur Personenbeförderung. Die Haltestange ist an ihren Enden mit ortsfesten Teilen des Fahrzeuges, wie Fußboden, Sitzlehnen, Fahrzeuginnendecke oder dergleichen, verdrehfest verbunden. Weiter ist in der Haltestange mindestens an einem Ende ein Füllstück von der Öffnung der Haltestange beabstandet angeordnet. Weiter weist das Füllstück eine axial angeordnete Gewindebohrung auf, in der der Gewindebolzen eines mit einer axialen Sackbohrung versehenen Druckstückes eingeschraubt ist. Die Sackbohrung nimmt einen an dem ortsfesten Teil des Fahrzeuges befestigten Kern auf. Das Füllstück weist eine radial angeordnete, durchgehende Gewindebohrung auf, in der ein durch eine Bohrung in der Wandung der Haltestange in das Füllstück einschraubbarer Gewindestift angeordnet ist.

Die DE 295 18 343 U1 offenbart eine Haltestangenbefestigung für Fahrzeuge, insbesondere Nahverkehrsfahrzeuge, im Wesentlichen bestehend aus einer Tragstange, der Haltestangen zugeordnet sind, wobei die Tragstange Befestigungselemente, die entweder mit Dach- oder Gerippeteilen verbunden sowie zur vertikalen und horizontalen toleranzausgleichenden Befestigung der Tragstange geeignet ausgebildet sind, und Halteelemente trägt, die Mittel zum Ausgleich zumindest seitlicher Versatztoleranzen der Haltestangen zur Tragstange aufweisen, wobei die Haltestangen andererseits auf dem Fahrzeugfußboden oder an Innenausstattungen, wie Sitzen, bevorzugt axial höhenverstellbar, befestigt sind.

Die DE 298 05 233 U1 offenbart eine Befestigung von Ausrüstungsteilen, beispielsweise Trennwänden und Haltestangen, in Schienenfahrzeugen oder Omnibussen, wobei ein Befestigungselement an einer Seite mit einem Gewinde versehen und über dieses Gewinde mit der Fahrzeugstruktur verbunden ist und an der anderen Seite einen bolzenförmigen Abschnitt aufweist, der quer zur Längsachse des Befestigungselements kraftübertragend in das Ausrüstungsteil eingreift und mit einer dem Arretieren des Ausrüstungsteils in Richtung der Längsachse des Befestigungselements dienenden Halterung versehen ist.

Die DE 299 13 289 U1 offenbart ein Haltestangensystem für öffentliche Verkehrsmittel, insbesondere für Busse und Bahnen. Herkömmliche Haltestangensysteme bestehen aus einzelnen, miteinander durch sogenannte Klammern oder Knoten verbundenen Stahlrohren, wobei die Klammern oder Knoten jeweils aus zwei miteinander korrespondierenden, mittig entlang der Längsachse geteilten Stücken bestehen, die um die miteinander zu verbindenden Rohrenden gelegt und sodann miteinander verschraubt werden, wobei eine entsprechende Bohrung sowohl in den Klammer- oder Knotenteilen, meist Gussteilen, wie auf den entsprechenden Rohrenden vorhanden sein muss.

Die WO 2005/102773 A1 zeigt eine Vorrichtung gemäß dem Oberbegriff des Anspruchs 1. Es stellt sich das technische Problem, eine Vorrichtung zur Befestigung mindestens einer Haltestange und ein Verfahren zur Herstellung einer solchen Vorrichtung zu schaffen, welche einen Fertigungsaufwand bei einer Fertigung von Teilen der erfindungsgemäßen Vorrichtung reduziert und gleichzeitig eine sichere Befestigung der Haltestange an Teilen des Fahrzeugs ermöglicht.

Vorgeschlagen wird eine Vorrichtung bzw. Anordnung zur Befestigung einer Haltestange, insbesondere zur Befestigung einer Haltestange an oder in einem schienenfahrzeug, insbesondere einem bezüglich dem Wagenkasten ortsfesten Teil des Schienenfahrzeuges. Die Vorrichtung umfasst ein Befestigungselement, ein Verbindungselement und die eine Haltestange. Gegebenenfalls kann ein anderes Ende der Haltestange über ein weiteres Verbindungselement und ein weiteres Befestigungselement an der tragenden Konstruktion des Schienenfahrzeugs befestigbar sein.

Mindestens ein Endabschnitt der Haltestange weist ein haltestangenseitiges Innengewinde auf. Die Haltestange kann hierbei einen hohlzylinderförmigen Querschnitt aufweisen. Weiter kann die Haltestange einen geraden Verlauf oder einen, zumindest teilweise, gekrümmten oder abgewinkelten Verlauf aufweisen. Vorstellbar ist, dass die Haltestange z.B. in einer Seitenansecht einen U-förmigen Verlauf aufweist. Hierbei können in vorteilhafter Weise, wie nachfolgend näher erläutert, beide Endabschnitte jeweils mittels eines Verbindungselements und eines Befestigungselements an einem Boden oder einer Seitenwand oder an einer Decke des Fahrzeuges, insbesondere des Schienenfahrzeuges, befestigt werden oder sein.

Die Haltestange kann hierbei mittels eines Gussverfahrens als Gussstück (z.B. aus Aluminium) hergestellt werden. Das haltestangenseitige Innengewinde kann dann, z.B. mittels eines Gewindeschneiders, in einem voll- oder hohlzylinderförmigen Endabschnitt ausgebildet werden. Hierbei weist das haltestangenseitige Innengewinde einen haltestangenseitigen Gewindedurchmesser auf.

Weiter weist das Verbindungselement mindestens ein Außengewinde auf. Ein erstes oder das einzige Außengewinde dient der Verbindung des Verbindungselements mit der Haltestange. Das Verbindungselement kann hierbei ebenfalls voll- oder hohlzylinderförmig ausgebildet sein. Hierbei kann, z.B. mittels eines Außengewindeschneiders, ein Außengewinde weist hierbei einen verbindungselementseitigen Gewindedurchmesser auf, der zu dem Gewindedurchmesser des haltestangenseitigen Innengewindes korrespondiert, so dass das Verbindungselement in den Endabschnitt der Haltestange einschraubbar ist.

Hierbei kann der haltestangenseitige Endabschnitt mechanische Endanschläge aufweisen, die eine Einschraubtiefe des Verbindungselements begrenzen. Alternativ oder kumulativ kann auch das Verbindungselement mechanische Endanschläge aufweisen, die eine Einschraubtiefe des Verbindungselements in die Haltestange begrenzen. Vorzugsweise wird/ist das Verbindungselement mittels des ersten Außengewindes nicht vollständig in den haltestangenseitigen Endabschnitt eingeschraubt.

Erfindungsgemäß weist ein Endabschnitt des Befestigungselements (befestigungselementseitiger Endabschnitt) ein befestigungselementseitiges Innengewinde auf. Der Endabschnitt des Befestigungselements kann hierbei voll- oder vorzugsweise hohlzylinderförmig ausgebildet sein, wobei, z.B. mittels eines Gewindeschneiders, ein befestigungselementseitiges Innengewinde an diesem Endabschnitt des Befestigungselements angeordnet wird. Das befestigungselementseitige Innengewinde weist einen Gewindedurchmesser auf, der zu dem Gewindedurchmesser des einzigen oder eines zweiten Außengewindes des Verbindungselements korrespondiert. Insbesondere kann der Gewindedurchmesser des befestigungselementseitigen Innengewindes gleich dem Gewindedurchmesser des haltestangenseitigen Innengewindes sein. Das Außengewinde ist in das befestigungselementseitige Innengewinde einschraubbar oder eingeschraubt.

Beispielsweise kann sich das Außengewinde über die gesamte Mantelfläche oder einen großen Teil der Mantelfläche des Verbindungselements erstrecken. Somit kann das Verbindungselement an einem ersten Ende des Verbindungselements mit der Haltestange und an einem weiteren Ende des Verbindungselements mit dem Befestigungselement verschraubt werden. Die Verschraubung erfolgt hierbei jeweils mittels verschiedener Abschnitte desselben Außengewindes. Alternativ ist/wird das erste verbindungselementseitige Außengewinde an einem ersten Ende oder Endabschnitt des Befestigungselements in die Haltestange und das zweite Außengewinde an einem weiteren Ende oder Endabschnitt des Verbindungselements in das Befestigungselement eingeschraubt.

In beiden Fällen ergibt sich in vorteilhafter Weise eine einfach herzustellende mechanische Verbindung der Haltestange mit einem Befestigungselement, wobei das Befestigungselement einer Befestigung an korrespondierenden Befestigungseinrichtungen des Fahrzeuges, beispielsweise an boden-, wand- oder deckenseitigen Befestigungseinrichtungen, die ortsfest sind, dient und entsprechend ausgestaltet ist. Speziell die Fertigung des Verbindungselements ist einfach, wenn das Verbindungselement nur ein einziges Außengewinde zur Verschraubung mit sowohl dem haltestangenseitigen Innengewinde als auch dem befestigungselementseitigen Innengewinde aufweist. Das Außengewinde kann in einem einzigen Arbeitsgang gefertigt werden. Weiter ergibt sich in vorteilhafter Weise, dass mittels der vorgeschlagenen Vorrichtung auch Befestigungselemente und Haltevorrichtungen aus unterschiedlichen Materialien in einfacher Weise mechanisch verbunden werden können. Insbesondere kann das Verbindungselement hülsenförmig sein, wobei sich das einzige Außengewinde über die gesamte Länge der Außenoberfläche der Hülse erstreckt.

Zusätzlich zu der vorgeschlagenen Befestigung kann die Anordnung aus Befestigungselement, Verbindungselement und Haltestange im verschraubten Zustand verklebt werden, beispielsweise mittels eines 2-Komponenten-Klebers. Hierdurch ergibt sich in vorteilhafter Weise eine höhere Befestigungskraft. Soll das Befestigungselement lösbar bleiben, kann lediglich die Verschraubung des Verbindungselements mit der Haltestange verklebt werden.

Weiter vorteilhaft ergibt sich, dass das Verbindungselement im eingeschraubten Zustand vollständig in dem haltestangenseitigen Endabschnitt als auch in dem korrespondierenden befestigungselementseitigen Endabschnitt angeordnet sein kann. Hierdurch ist das Verbindungselement nicht nach außen sichtbar, wodurch sich in vorteilhafter Weise eine einheitliche und somit ästhetische Optik der vorgeschlagenen Vorrichtung ergibt, wobei die Vorrichtung auch auf einfache Weise zu reinigen ist.

In einer weiteren Ausführungsform weisen der mindestens eine Endabschnitt der Haltestange und der als Endabschnitt ausgestaltete Abschnitt des Befestigungselements einen gleich großen Außendurchmesser auf. Hierdurch ergibt sich in vorteilhafter Weise, dass im verschraubten Zustand, in welchem das Verbindungselement vollständig in dem haltestangenseitigen Endabschnitt und dem befestigungselementseitigen Endabschnitt angeordnet ist, der haltestangenseitige Endabschnitt bündig an dem befestigungselementseitigen Endabschnitt anliegen kann und keine Kanten oder Vorsprünge auftreten, wodurch eine Ästhetik optimiert und eine Verletzungsgefahr minimiert wird. Außerdem ist die Reinigung weiter erleichtert.

In einer weiteren Ausführungsform weist das Befestigungselement einen Durchführabschnitt zum Durchführen des Befestigungselements durch eine Durchlassöffnung auf, wobei zumindest ein Durchmesser oder eine Breite des Durchführabschnitts geringer als der Außendurchmesser des Endabschnitts des Befestigungselements ist. Mit anderen Worten verjüngt sich das Befestigungselement in seinem Verlauf von der Haltestange zu der tragenden Konstruktion. Der Durchführabschnitt dient hierbei insbesondere einer Durchführung des Befestigungselements durch eine Innenverkleidung eines Fahrzeugraums, insbesondere eine Boden-, Wand- oder Deckenverkleidung, wobei ein Teil des Befestigungselements aus Sicht des Passagierraums (Innenraums) hinter der Verkleidung angeordnet ist und zumindest der Endabschnitt des Befestigungselements vor der Innenverkleidung angeordnet ist. Die Verkleidung weist hierbei eine Durchlassöffnung auf, die beispielsweise als Durchlassspalt oder Durchlassloch ausgebildet sein kann. Das Befestigungselement kann hierbei derart an einer boden-, wand- oder deckenseitigen korrespondierenden Befestigungseinrichtung befestigt werden/sein, dass der Durchführabschnitt durch die Durchlassöffnung der Verkleidung hindurchragt. Hierdurch können in vorteilhafter Weise bezüglich einer Dimension kleine Durchlassöffnungen in einer Boden-, Wand- oder Deckenverkleidung angeordnet werden, wodurch sich z.B. eine mechanische Stabilität der Boden-, Wand- oder Deckenverkleidung im Vergleich zu größeren Durchlassöffnungen vergrößert.

Zur Erfindung gehört auch eine Anordnung mit der Vorrichtung und der Innenverkleidung. Außerdem gehört zur Erfindung auch ein Wagenkasten, in dem die Befestigungsvorrichtung mit der Haltestange an einer tragenden Konstruktion des Wagenkastens befestigt ist und z.B. in der genannten besonderen Ausführungsform auch die Innenverkleidung und den Durchführungsabschnitt aufweist. Ferner gehört zur Erfindung ein Schienenfahrzeug mit einem Wagenkasten und der Vorrichtung, die insbesondere den Durchführungsabschnitt und die Innenverkleidung aufweist.

In einer weiteren Ausführungsform schließt sich der Durchführabschnitt an den Endabschnitt des Befestigungselements an. Hierbei kann der befestigungselementseitige Endabschnitt an einer Grundseite eine erste Öffnung zum Einschrauben des Verbindungselements aufweisen. An einer der Grundseite gegenüberliegenden Seite des Endabschnitts kann sich der befestigungselementseitige Endabschnitt zumindest teilweise verjüngen und in den beschriebenen Durchführabschnitt übergehen. Hierdurch ergibt sich in vorteilhafter Weise, dass der befestigungselementseitige Endabschnitt unmittelbar vor einer boden-, wand- oder deckenseitigen Verkleidung, durch welchen das Befestigungselement mittels des Durchführabschnitts hindurchragt, angeordnet ist. Hierdurch ergibt sich in vorteilhafter Weise eine einheitliche ästhetische Optik sowie eine Reduktion einer Verletzungsgefahr, da zwischen dem befestigungselementseitigen Endabschnitt und dem Durchführabschnitt und somit der Verkleidung keine weiteren Abschnitte des Befestigungselements angeordnet sind.

In einer weiteren Ausführungsform weist das Befestigungselement Befestigungseinrichtungen zum Befestigung des Befestigungselements an einem Fahrzeugteil auf. Die befestigungselementseitigen Befestigungseinrichtungen können beispielsweise als Löcher, Bohrungen, Langlöcher oder Gewindelöcher ausgebildet sein. Hierbei wird das Befestigungselement mittels der befestigungselementseitigen Befestigungseinrichtungen an korrespondierenden fahrzeugseitigen Befestigungseinrichtungen befestigt. Die Befestigung kann hierbei beispielsweise durch Verschrauben erfolgen. Vorzugsweise weist das Befestigungselement zusätzlich zu dem Endabschnitt und dem Durchführabschnitt einen Befestigungsabschnitt auf, wobei die vorgeschlagenen befestigungselementseitigen Befestigungseinrichtungen ausschließlich an dem Befestigungsabschnitt angeordnet sind. Somit wird in vorteilhafter Weise erreicht, dass Befestigungsmittel, z.B. Schrauben, im eingesetzten Zustand der erfindungsgemäßen Vorrichtung hinter einer Boden-, Wand- oder Deckenverkleidung angeordnet sind und somit keine Verletzungsgefahr und keine Reinigungserschwernis darstellen können.

In einer weiteren Ausführungsform ist das Befestigungselement L-förmig mit zwei gegeneinander abgewinkelten Schenkeln ausgebildet, wobei einer der Schenkel den Durchführabschnitt und den korrespondierenden Endabschnitt aufweist. Der weitere zweite Schenkel kann den Befestigungsabschnitt oder einen Teil des Befestigungsabschnitts aufweisen. Auch kann sich der Befestigungsabschnitt über den zweiten Schenkel und einen Teil des ersten Schenkels erstrecken, wobei der erste Schenkel den Durchführabschnitt und den korrespondierenden Endabschnitt aufweist.

Hierdurch ergibt sich in vorteilhafter Weise eine einfache Befestigung der vorgeschlagenen Vorrichtung mittels des Befestigungselements an wand- oder deckendseitigen oder bodenseitigen korrespondierenden Befestigungseinrichtungen. Insbesondere kann sich der erste Schenkel des L durch die oben erwähnte Durchlassöffnung in der Verkleidung von Wand, Boden oder Decke erstrecken und der zweite Schenkel der Befestigung mit der tragenden Konstruktion dienen.

In einer weiteren Ausführungsform ist das Verbindungselement hohlzylinderförmig (oder weist zumindest einen durchgehend offenen Innenraum auf) mit zumindest einer Öffnung in der Deckel- und in der Bodenfläche ausgebildet. Anders ausgedrückt ist das Verbindungselement hülsenförmig mit einer in Längsrichtung durchgehenden Durchgangsöffnung. Dabei sind die Außengewinde oder das einzige Außengewinde am Außenumfang des Hohlzylinders/der Hülse ausgebildet. Durch die Öffnungen in der Deckel- und in der Bodenfläche sowie durch das Innenvolumen des hohlzylinderförmigen Verbindungselements (d.h. durch die Durchgangsöffnung) kann in vorteilhafter Weise z.B. ein Kabel geführt werden. Hierdurch wird in vorteilhafter Weise ermöglicht, dass auch im verschraubten Zustand der vorgeschlagenen Vorrichtung ein Kabel in ein Innenvolumen einer z.B. hohlzylinderförmigen Haltestange einführbar ist.

In einer weiteren Ausführungsform ist der Endabschnitt des Befestigungselements hohlzylinderförmig ausgebildet, wobei der Endabschnitt grundseitig eine erste Öffnung zum Einsetzen des Verbindungselements und stirnseitig eine Durchlassöffnung oder einen Durchlasskanal aufweist. Hierbei kann die stirnseitig angeordnete Durchlassöffnung oder der stirnseitig angeordnete Durchlasskanal des Endabschnitts mit den vorhergehend beschriebenen Öffnungen in der Deckel- und Bodenfläche des Verbindungselements im eingeschraubten Zustand des Verbindungselements fluchten. Hierdurch kann in vorteilhafter Weise z.B. ein Kabel durch das Befestigungselement und durch das Verbindungselement in eine Haltestange eingeführt werden.

In einer weiteren Ausführungsform weist auch der Durchführabschnitt eine Durchlassöffnung oder einen Durchlasskanal auf, wobei die Durchlassöffnung oder der Durchlasskanal des Durchführabschnitts mit der Durchlassöffnung oder dem Durchlasskanal des Endabschnitts fluchtet. Hierdurch kann in vorteilhafter Weise ein Kabel durch den Durchlassabschnitt und den Endabschnitt und durch eine Öffnung in einer Deckel- und Bodenfläche des Verbindungselements im verschraubten Zustand des Verbindungselements in eine vorzugsweise hohlzylinderförmige Haltestange eingeführt werden. Somit ist in vorteilhafter Weise ein Innenvolumen der Haltestange auch im verschraubten und befestigten Zustand der Haltestange zugänglich, wodurch in vorteilhafter Weise eine Kabelführung durch die hohlzylinderförmige Haltestange möglich ist.

Weiter vorgeschlagen wird ein Verfahren zur Herstellung mindestens einer Vorrichtung zur Befestigung mindestens einer Haltestange, insbesondere an einem ortsfesten Teil eines Schienenfahrzeugs. Hierbei wird ein Befestigungselement bereitgestellt, wobei weiter eine Haltestange bereitgestellt wird, wobei an mindestens einem Endabschnitt der Haltestange ein haltestangenseitige Innengewinde angeordnet wird. Weiter wird ein Verbindungselement bereitgestellt, wobei an dem Verbindungselement mindestens ein erstes verbindungselementseitiges Außengewinde angeordnet wird, wobei das mindestens erste verbindungselementseitige Außengewinde in das haltestangenseitige Innengewinde eingeschraubt wird. Erfindungsgemäß wird an einem Endabschnitt des Befestigungselements ein befestigungselementseitiges Innengewinde angeordnet, wobei das mindestens erste verbindungselementseitige Außengewinde oder ein weiteres verbindungselementseitiges Außengewinde ebenfalls in das befestigungselementseitige Innengewinde eingeschraubt wird. Hierdurch ist in vorteilhafter Weise die vorhergehend beschriebene Vorrichtung herstellbar. Insbesondere kann als Verbindungselement ein hohlzylinderförmiges Verbindungselement mit zumindest einer Öffnung in Deckel- und Bodenfläche verwendet werden.

Die Erfindung wird anhand eines Ausführungsbeispiels näher erläutert. Die Fig. zeigen:
- Fig. 1: eine perspektivische Ansicht einer erfindungsgemäßen Vorrichtung,
- Fig. 2: eine Seitenansicht der in Fig. 1 dargestellten Vorrichtung,
- Fig. 3: eine Draufsicht auf eine in Fig. 1 dargestellte Vorrichtung,
- Fig. 4: einen Querschnitt durch die in Fig. 1 dargestellte Vorrichtung und
- Fig. 5: ein Detail der in Fig. 1 dargestellten Vorrichtung.

Nachfolgend bezeichnen gleiche Bezugszeichen Elemente mit gleichen oder ähnlichen technischen Eigenschaften.

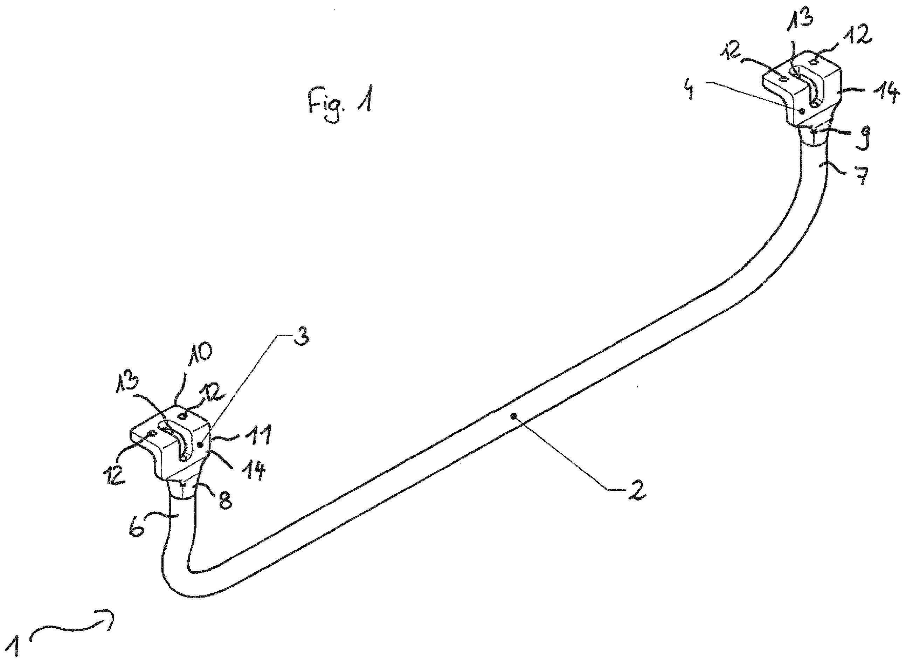

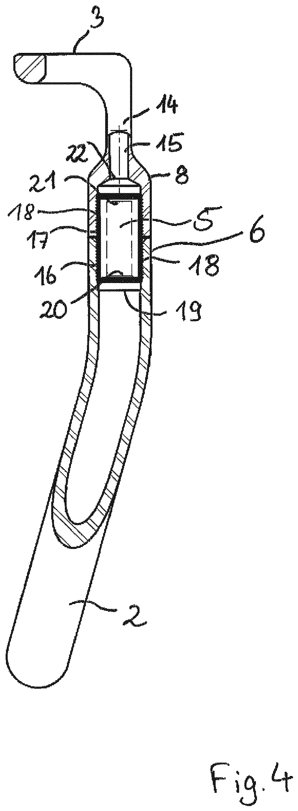

In Fig. 1 ist eine Vorrichtung 1 zur Befestigung mindestens einer Haltestange 2 dargestellt. Die Vorrichtung 1 umfasst ein erstes Befestigungselement 3 und ein zweites Befestigungselement 4. Weiter umfasst die Vorrichtung 1 z.B. in Fig. 4 dargestellte Verbindungselemente 5. Weiter umfasst die Vorrichtung 2 die Haltestange 2. Die Haltestange 2 weist einen ersten Endabschnitt 6 und einen zweiten Endabschnitt 7 auf. Die Befestigungselemente 3, 4 weisen ihrerseits zu den haltestangenseitigen Endabschnitten 6, 7 korrespondierende Endabschnitte 8, 9 auf. Mittels der Verbindungselemente 5 ist die Haltestange 2 mit den Befestigungselementen 3, 4 in nachfolgend näher erläuterter Weise mechanisch verbindbar.

In Fig. 1 ist dargestellt, dass die Befestigungselemente 3, 4 L-förmig ausgebildet sind. Z.B. weist das erste Befestigungselement 3 einen ersten Schenkel 10 und einen zweiten Schenkel 11 auf. Der erste Schenkel 10 weist zwei Bohrungen 12 auf, die einer Befestigung des Befestigungselements 3 an nicht dargestellten korrespondierenden Befestigungseinrichtungen eines Fahrzeuges dienen. Weiter weist das erste Befestigungselement 3 ein Langloch 13 auf, welches sich über den ersten Schenkel 10 und den zweiten Schenkel 11 erstreckt. Der zweite Schenkel 11 des ersten Befestigungselements 3 umfasst hierbei einen Durchführabschnitt 14 und den vorhergehend beschriebenen Endabschnitt 8. Analog ist das zweite Befestigungselement 4 ausgebildet.

Wird die in Fig. 1 dargestellte Vorrichtung 1 mittels der Bohrungen 12 und gegebenenfalls des Langlochs 13 an z.B. boden-, wand- oder deckenseitigen Befestigungseinrichtungen des Fahrzeuges befestigt, so kann der erste Schenkel 10 und zumindest ein Teil des zweiten Schenkels 11 hinter einer Boden-, Wand- oder Deckenverkleidung angeordnet sein. Der Durchführabschnitt 14 kann in diesem Fall durch eine Durchlassöffnung der Verkleidung hindurchgeführt werden. Somit liegen also nur die Endabschnitte 8, 9 vor einer Boden-, Wand- oder Deckenverkleidung.

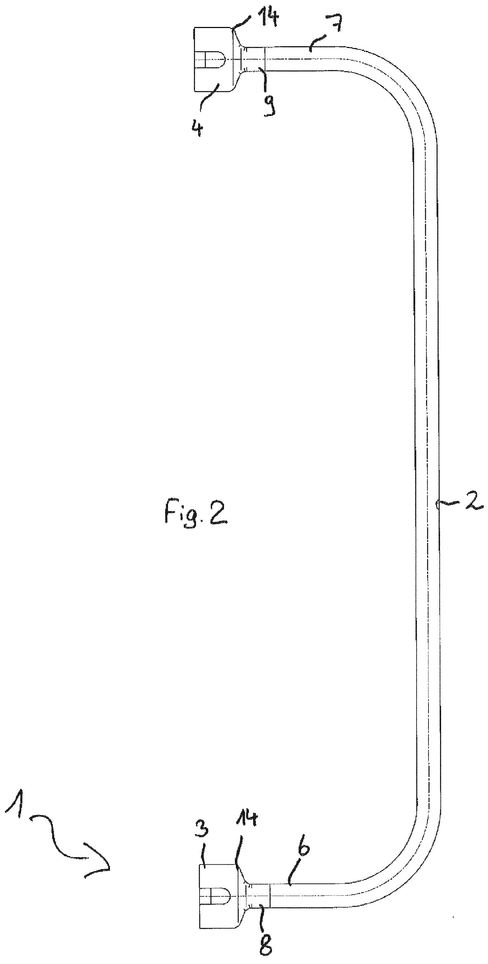

In Fig. 2 ist die in Fig. 1 dargestellte Vorrichtung 1 in einer Seitenansicht dargestellt. Hierbei ist ersichtlich, dass die Endabschnitte 6, 7 der Haltestange 2 und die Endabschnitte 8, 9 der Befestigungselemente 3, 4 einen gleichen Außendurchmesser aufweisen. Weiter ist dargestellt, dass sich ein Durchführabschnitt 14 unmittelbar an die Endabschnitte 8, 9 der Befestigungselemente 3, 4 anschließt. In der in Fig. 2 dargestellten Seitenansicht weist der Durchführabschnitt eine Breite auf, die größer als ein Außendurchmesser der korrespondierenden Endabschnitte 8, 9 ist. In Fig. 4 ist jedoch dargestellt, dass der Durchführabschnitt 14 im Querschnitt eine weitere Breite aufweist, die geringer als ein Außendurchmesser der Endabschnitte 8, 9 ist.

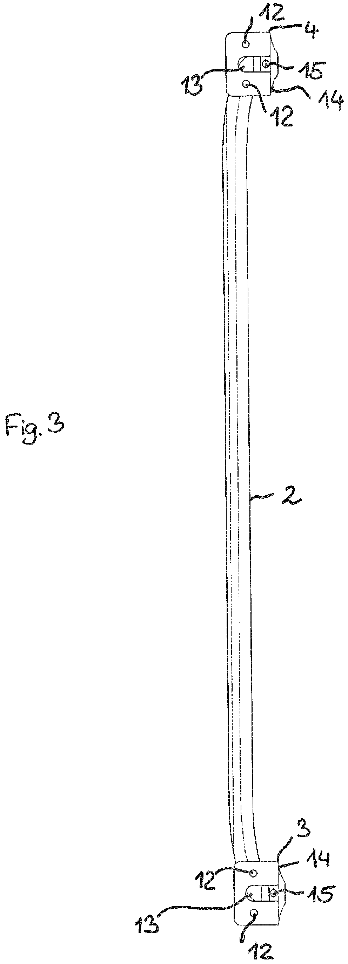

In Fig. 3 ist eine Draufsicht auf die in Fig. 1 dargestellte Vorrichtung 1 dargestellt. Hierbei ist dargestellt, dass die Durchführabschnitte 14 jeweils einen Durchlasskanal 15 aufweisen, der nachfolgend näher erläutert wird.

In Fig. 4 ist ein Querschnitt durch das in Fig. 1 dargestellte erste Befestigungselement 3 und den ersten Endabschnitt 6 der Haltestange 2 dargestellt. Hierbei ist ein Verbindungselement 5 dargestellt. Der erste Endabschnitt 6 der Haltestange 2 weist ein haltestangenseitiges Innengewinde 16 auf. Der korrespondierende Endabschnitt 8 des Befestigungselements 3 weist ein befestigungselementseitiges Innengewinde 17 auf, wobei ein Gewindedurchmesser des haltestangenseitigen Innengewindes 16 und des befestigungselementseitigen Innengewindes 17 gleich sind. Das Verbindungselement 5 ist hohlzylinderförmig ausgebildet und weist ein verbindungselementseitiges Außengewinde 18 auf, dessen Gewindedurchmesser zu den Gewindedurchmessern des haltestangenseitigen Innengewindes 16 und des befestigungselementseitigen Innengewindes 17 korrespondiert. Hierbei ist weiter ein mechanischer Anschlag 19 dargestellt, der ebenfalls im ersten Endabschnitt 6 der Haltestange 2 angeordnet ist und eine Verschraubungstiefe des Verbindungselements 5 begrenzt. Das Verbindungselement 5 ist mittels des Außengewindes 18 in den ersten Endabschnitt 6 und den Endabschnitt 8 des ersten Befestigungselements 3 einschraubbar, wodurch eine mechanische Verbindung des ersten Befestigungselements 3 und des ersten Endabschnitts 6 und somit der Haltestange 2 herstellbar ist. Das Verbindungselement 5 ist hohlzylinderförmig ausgebildet. Eine Bodenfläche 20 des Verbindungselements 5 weist eine nicht dargestellte Öffnung auf. Auch eine Deckelfläche 21 des Verbindungselements 5 weist eine Öffnung auf. Weiter weist der Endabschnitt 8 des ersten Befestigungselements 3 stirnseitig eine Durchlassöffnung 22 auf, der mit dem in Fig. 3 dargestellten Durchlasskanal 15 fluchtet, welcher im Durchführabschnitt 14 des ersten Verbindungselements 3 angeordnet ist. Im verschraubten Zustand fluchten der Durchlasskanal 15, die Durchlassöffnung 22 und die in der Deckel- und Bodenfläche 20, 21 angeordneten Öffnungen, so dass z.B. ein Kabel durch den Durchlasskanal 15 und die Öffnungen 20, 21, 22 in die hohlzylinderförmige Haltestange 2 einführbar ist.

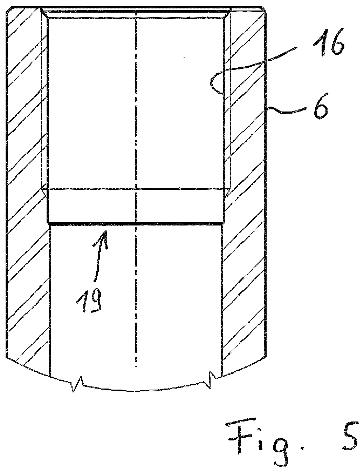

In Fig. 5 ist der erste Endabschnitt 6 der in Fig. 1 dargestellten Vorrichtung 1 dargestellt. Hierbei ist detailliert ein Endanschlag 19 dargestellt, mittels dessen eine Einschraubtiefe eines in Fig. 4 dargestellten Verbindungselements 5 begrenzt wird. Weiter dargestellt ist das haltestangenseitige Innengewinde 16.

### Bezugszeichenliste

- 1: Vorrichtung
- 2: Haltestange
- 3: erstes Befestigungselement
- 4: zweites Befestigungselement
- 5: Verbindungselement
- 6: erster haltestangenseitige Endabschnitt
- 7: zweiter haltestangenseitige Endabschnitt
- 8: befestigungselementseitiger Endabschnitt
- 9: befestigungselementseitiger Endabschnitt
- 10: erster Schenkel
- 11: zweiter Schenkel
- 12: Bohrungen
- 13: Langloch
- 14: Durchführabschnitt
- 15: Durchlasskanal
- 16: haltestangenseitiges Innengewinde
- 17: befestigungselementseitiges Innengewinde
- 18: Außengewinde
- 19: Endanschlag
- 20: Bodenseite
- 21: Deckelseite
- 22: Durchlassöffnung

## Patentansprüche

1. Vorrichtung, insbesondere für Schienenfahrzeuge, wobei die Vorrichtung mindestens eine Haltestange (2), mindestens ein Befestigungselement (3, 4) zum Befestigen der Haltestange (2) an einer tragenden Konstruktion und mindestens ein Verbindungselement (5) umfasst, wobei mindestens ein Endabschnitt (6, 7) der Haltestange (2) ein haltestangenseitiges Innengewinde (16) aufweist, wobei das Verbindungselement (5) ein erstes Außengewinde (18) aufweist, wobei das erste Außengewinde (18) in das haltestangenseitige Innengewinde (16) einschraubbar ist, wobei ein befestigungselementseitiger Abschnitt (8, 9) des Befestigungselements (3, 4) ein befestigungselementseitiges Innengewinde (17) aufweist, wobei das erste Außengewinde (18) oder ein zweites Außengewinde des Verbindungselements in das befestigungselementseitige Innengewinde (17) einschraubbar ist, **dadurch gekennzeichnet, dass** das Verbindungselement (5) hohlzylinderförmig mit zumindest einer Öffnung in Deckel- und Bodenfläche (20, 21) ausgebildet ist.

2. Vorrichtung nach Anspruch 1, **dadurch gekennzeichnet, dass** der Außendurchmesser des Endabschnitt (6, 7) der Haltestange (2) und der Außendurchmesser des als Endabschnitt (8, 9) ausgestalteten befestigungselementseitigen Abschnitts des Befestigungselements (3, 4) gleich groß sind.

3. Vorrichtung nach Anspruch 2, **dadurch gekennzeichnet, dass** das Befestigungselement (3, 4) einen Durchführabschnitt (14) aufweist, wobei zumindest ein Durchmesser oder eine Breite des Durchführabschnitts (14) geringer als der Außendurchmesser des Endabschnitts (8, 9) ist.

4. Vorrichtung nach Anspruch 3, **dadurch gekennzeichnet, dass** sich der Durchführabschnitt (14) an den befestigungselementseitigen Abschnitt (8, 9) des Befestigungselements (2) anschließt.

5. Vorrichtung nach einem der beiden vorangegangenen Ansprüche, **dadurch gekennzeichnet, dass** das Befestigungselement (3, 4) L-förmig mit zwei gegeneinander abgewinkelten Schenkeln ausgebildet ist, wobei einer der Schenkel (11) den Durchführabschnitt (14) und den Endabschnitt (8, 9) aufweist.

6. Vorrichtung nach Anspruch 1, **dadurch gekennzeichnet, dass** das Befestigungselement (3, 4) Befestigungseinrichtungen zum Befestigen des Befestigungselement (3, 4) an einem Fahrzeugteil aufweist.

7. Vorrichtung nach den Ansprüchen 2-5, **dadurch gekennzeichnet, dass** der Endabschnitt (8, 9) als hohlzylinderförmiger Endabschnitt ausgebildet ist, wobei der befestigungselementseitige Endabschnitt (8, 9) grundseitig eine erste Öffnung zum Einsetzen des Verbindungselements (5) und stirnseitig eine Durchlassöffnung (22) oder einen Durchlasskanal aufweist.

8. Vorrichtung nach den Ansprüchen 3 bis 5, **dadurch gekennzeichnet, dass** auch der Durchführabschnitt (14) eine Durchlassöffnung oder einen Durchlasskanal (15) aufweist, wobei die Durchlassöffnung oder der Durchlasskanal (15) des Durchführabschnitts (14) mit der Durchlassöffnung (22) oder dem Durchlasskanal des befestigungselementseitigen Endabschnitts (8, 9) fluchtet.

9. Verfahren zur Herstellung einer Vorrichtung (1) nach einem der vorhergehenden Ansprüche, wobei das erste Außengewinde (18) in das haltestangenseitige Innengewinde (16) eingeschraubt wird, wobei das erste Außengewinde (18) oder das zweite Außengewinde des Verbindungselements in das befestigungselementseitige Innengewinde (17) eingeschraubt wird.

## Claims

1. A device, in particular for rail vehicles, wherein the device comprises at least one handrail (2), at least one fastening element (3, 4) for fastening the handrail (2) to a supporting structure and at least one connection element (5), wherein at least one end portion (6, 7) of the handrail (2) has a handrail-side internal thread (16), wherein the connection element (5) has a first external thread (18), wherein the first external thread (18) can be screwed into the handrail-side internal thread (16), wherein a fastening-element-side portion (8, 9) of the fastening element (3, 4) has a fastening-element-side internal thread (17), wherein the first external thread (18) or a second external thread of the connection element can be screwed into the fastening-element-side internal thread (17), **characterised in that** the connection element (5) is hollow-cylindrical with at least one opening in the top face and bottom face (20, 21).

2. The device according to claim 1, **characterised in that** the outer diameter of the end portion (6, 7) of the handrail (2) and the outer diameter of the fastening-element-side portion of the fastening element (3, 4) formed as an end portion (8, 9) are the same size.

3. The device according to claim 2, **characterised in that** the fastening element (3, 4) has a feedthrough portion (14), wherein at least a diameter or a width of the feedthrough portion (14) is smaller than the outer diameter of the end portion (8, 9).

4. The device according to claim 3, **characterised in that** the feedthrough portion (14) adjoins the fastening-element-side portion (8, 9) of the fastening element (2).

5. The device according to any one of the two preceding claims, **characterised in that** the fastening element (3, 4) is L-shaped with two limbs angled relative to one another, wherein one of the limbs (11) comprises the feedthrough portion (14) and the end portion (8, 9).

6. The device according to claim 1, **characterised in that** the fastening element (3, 4) has fastening devices for fastening the fastening element (3, 4) to a vehicle part.

7. The device according to claims 2-5, **characterised in that** the end portion (8, 9) is formed as a hollow-cylindrical end portion, wherein the fastening-element-side end portion (8, 9) on the base side has a first opening for insertion of the connection element (5) and on the end side has a passage opening (22) or a passage channel.

8. The device according to claims 3 to 5, **characterised in that** the feedthrough portion (14) also has a passage opening or a passage channel (15), wherein the passage opening or the passage channel (15) of the feedthrough portion (14) is aligned with the passage opening (22) or the passage channel of the fastening-element-side end portion (8, 9).

9. A method for producing a device (1) according to any one of the preceding claims, wherein the first external thread (18) is screwed into the handrail-side internal thread (16), wherein the first external thread (18) or the second external thread of the connection element is screwed into the fastening-element-side internal thread (17).

## Revendications

1. Dispositif, en particulier pour des véhicules ferroviaires,
dans lequel le dispositif comprend au moins une tige de maintien (2), au moins un élément de fixation (3, 4) servant à fixer la tige de maintien (2) au niveau d'une structure porteuse et au moins un élément de liaison (5), dans lequel au moins une section d'extrémité (6, 7) de la tige de maintien (2) présente un filetage intérieur (16) situé côté tige de maintien, dans lequel l'élément de liaison (5) présente un premier filetage extérieur (18), dans lequel le premier filetage extérieur (18) peut être vissé dans le filetage intérieur (16) situé côté tige de maintien,
dans lequel une section (8, 9), située côté élément de fixation, de l'élément de fixation (3, 4) présente un filetage intérieur (17) situé côté élément de fixation, dans lequel le premier filetage extérieur (18) ou un deuxième filetage extérieur de l'élément de liaison peut être vissé dans le filetage intérieur (17) situé côté élément de fixation, **caractérisé en ce que** l'élément de liaison (5) est réalisé de manière à présenter une forme de cylindre creux avec au moins une ouverture dans la surface de couvercle et de fond (21, 21).

2. Dispositif selon la revendication 1, **caractérisé en ce que** le diamètre extérieur de la section d'extrémité (6, 7) de la tige de maintien (2) et le diamètre extérieur de la section, située côté élément de fixation et configurée sous la forme d'une section d'extrémité (8, 9), de l'élément de maintien (3, 4) présentent la même dimension.

3. Dispositif selon la revendication 2,
**caractérisé en ce que** l'élément de fixation (3, 4) présente une section de guidage traversant (14), dans lequel au moins un diamètre ou une largeur de la section de guidage traversant (14) est inférieur(e) au diamètre extérieur de la section d'extrémité (8, 9).

4. Dispositif selon la revendication 3, **caractérisé en ce que** la section de guidage traversant (14) se raccorde à la section (8, 9), située côté élément de fixation, de l'élément de fixation (2).

5. Dispositif selon l'une quelconque des deux revendications précédentes, **caractérisé en ce que** l'élément de fixation (3, 4) est réalisé de manière à présenter une forme de L avec deux branches coudées l'une par rapport à l'autre, dans lequel l'une des branches (11) présente la section de guidage traversant (14) et la section d'extrémité (8, 9).

6. Dispositif selon la revendication 1,
**caractérisé en ce que** l'élément de fixation (3, 4) présente des systèmes de fixation servant à fixer l'élément de fixation (3, 4) au niveau d'une partie de véhicule.

7. Dispositif selon les revendications 2 - 5,
**caractérisé en ce que** la section d'extrémité (8, 9) est réalisée sous la forme d'une section d'extrémité présentant une forme de cylindre creux, dans lequel la section d'extrémité (8, 9) située côté élément de fixation présente, du côté de la base, une première ouverture servant à insérer l'élément de liaison (5) et, du côté frontal, une ouverture de passage (22) ou un canal de passage.

8. Dispositif selon les revendications 3 à 5,
**caractérisé en ce que** la section de guidage traversant (14) également présente une ouverture de passage ou un canal de passage (15), dans lequel l'ouverture de passage ou le canal de passage (15) de la section de guidage traversant (14) est alignée avec l'ouverture de passage (22) ou le canal de passage de la section d'extrémité (8, 9) située côté élément de fixation.

9. Procédé servant à fabriquer un dispositif (1) selon l'une quelconque des revendications précédentes, dans lequel le premier filetage extérieur (18) est vissé dans le filetage intérieur (16) situé côté tige de maintien, dans lequel le premier filetage extérieur (18) ou le deuxième filetage extérieur de l'élément de liaison est vissé dans le filetage intérieur (17) situé côté élément de fixation.
